(19) Europäisches Patentamt
European Patent Office
Office européen des brevets

(11) **EP 2 082 940 A1**

(12) **DEMANDE DE BREVET EUROPEEN**

(43) Date de publication:
**29.07.2009 Bulletin 2009/31**

(51) Int Cl.:
*B60W 50/04* (2006.01)    *G06F 11/30* (2006.01)
*B60W 30/12* (2006.01)

(21) Numéro de dépôt: **08172155.7**

(22) Date de dépôt: **18.12.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **24.01.2008 FR 0850439**

(71) Demandeur: **PEUGEOT CITROËN AUTOMOBILES S.A.**
**78140 Vélizy Villacoublay (FR)**

(72) Inventeurs:
- **Monod, Rémi**
  **92400 Courbevoie (FR)**
- **Pengov, Marco**
  **92500 Rueil Malmaison (FR)**
- **Popo, Pierre Yann Francis**
  **92310 Sevres (FR)**

(54) **Dispositif et procédé de detection d'un état particulier de véhicule**

(57)    Le dispositif de détection comprend :
un module (1) de diagnostic comprenant :
- un premier sous module (3) de test agencé pour générer un résultat de test (Wj) associé à chaque résidu (Rj), un résidu étant défini comme un décalage sur le signal de détection délivré par un capteur ou bien des combinaisons de plusieurs signaux ;- un deuxième sous module (4), recevant en entrée les résultats de test(Wj) délivrés par le premier sous-module (3) de façon à affecter une pondération (kj) à chaque résultat de test ;
- un troisième sous module (5) recevant les résultats pondérés délivrés par le deuxième sous module (4) et qui effectue une somme des résultats de tests pondérés (kj*Wj)
- un quatrième sous module (6) qui à partir de la somme obtenue dans le troisième sous module (5) détermine si le véhicule est en situation ligne droite ou non en comparant la somme des tests à une valeur de seuil.

Fig. 4

EP 2 082 940 A1

**Description**

Le domaine de l'invention est celui de la fiabilisation des mesures effectuées sur un véhicule en les corrélant à un état particulier du véhicule, notamment un état de progression en ligne droite d'un véhicule.

Les systemes présents sur les véhicules nécessitent généralement des informations fournies par des capteurs. En conséquence, de nombreux capteurs sont présents dans les véhicules, délivrant des signaux de différentes natures, analogiques, numériques, logiques ou autres, avec des performances en termes de robustesse, de sensibilité, de résolution, d'immunité aux bruits ou autres, qui sont liées à la physique même des capteurs.

Une recherche d'amélioration constante des systemes, demande une fiabilité et une précision sans cesse accrue des informations délivrées par les capteurs. Cependant, une intervention sur les capteurs eux-mêmes est souvent non envisageable pour différentes causes telles que le coût, l'encombrement, la complexité ou autres. C'est pourquoi il est intéressant de développer des méthodes de traitement numérique, agissant en aval de la chaîne de transmission des données capteur.

Parmi les défauts prépondérants pouvant survenir sur les capteurs il y a la présence d'un biais, ou décalage (offset en anglais) sur le signal. Cette valeur résiduelle non désirée, également appelée « résidu », peut être dû à des dérives engendrées par l'usure, la température ou d'autres phénomenes ou résulter d'un mauvais réglage initial (étalonnage, méconnaissance du 'zéro').

Le brevet EP1388473 propose de générer deux signaux de correction de décalage pour un capteur dynamique mais ne donne pas de méthode satisfaisante pour acquérir et traiter les valeurs de décalage de façon à élaborer les signaux de correction.

Le brevet EP0844462 divulgue une centrale de navigation dans laquelle une erreur de gain de vitesse angulaire est corrigée au moyen d'un détecteur d'azimut.

Le probleme posé par les méthodes connues de correction est sur la façon d'apprécier le décalage lui-même.

Pour remédier au probleme posé, un objet de l'invention est un dispositif de détection fiabilisée d'un état de progression en ligne droite d'un véhicule équipé d'une pluralité de capteurs, ledit dispositif comprenant un module (1) de diagnostic comprenant :

- un premier sous module de test agencé pour générer un résultat de test associé à chaque résidu, un résidu étant défini comme un décalage sur le signal de détection délivré par un capteur ou bien des combinaisons de plusieurs signaux ;
- un deuxième sous module, recevant en entrée les résultats de test délivrés par le premier sous-module de façon à affecter une pondération à chaque résultat de test ;
- un troisième sous module recevant les résultats pondérés délivrés par le deuxième sous module et qui effectue une somme des résultats de tests pondérés ;
- un quatrième sous module qui à partir de la somme obtenue dans le troisième sous module, détermine si le véhicule est en situation ligne droite ou non en comparant la somme des tests à une valeur de seuil.

Le dispositif peut comporter en outre :

- un module de diagnostic agencé pour indiquer ledit état de progression en ligne droite partir de résidus corrigés;
- un différentiateur agencé pour générer un résidu corrigé en retranchant un décalage d'un résidu calculé ;
- un module d'instrumentation agencé pour générer le résidu calculé à partir d'au moins une valeur de capteur ;
- un module d'estimation agencé pour générer ledit décalage représentatif d'un écart entre le résidu calculé et une valeur de référence lorsque le véhicule est dans ledit état particulier.

Particulièrement le module d'estimation est agencé pour ajuster le décalage initialement nul, à partir du résidu corrigé.

Avantageusement le module d'estimation est agencé pour ajuster le décalage à partir d'une valeur moyenne de résidus calculés ou corrigés, calculée pendant une première durée continue au cours de laquelle le véhicule est resté dans ledit état particulier.

Plus précisément, ladite durée continue est strictement incluse dans une deuxième durée de plus grande étendue que la première durée et au cours de laquelle le véhicule est resté dans ledit état particulier.

Plus particulièrement, le module de diagnostic est agencé pour indiquer ledit état de progression en ligne droite au moyen d'un test de Wald appliqué sur résidus corrigés.

Parmi différentes variantes de mises en oeuvre :

- le dispositif comprend un module agencé pour recaler une valeur de capteur à partir d'un résidu corrigé ;
- le module de diagnostic est agencé pour indiquer un état de progression en ligne droite;

- le module d'instrumentation est agencé pour générer le résidu calculé à partir d'au moins une valeur de capteur différente selon une situation de véhicule en ligne droite ou en ligne courbe;
- le module d'estimation est agencé pour générer ledit décalage représentatif d'un écart entre le résidu calculé et une valeur nulle lorsque le véhicule est dans ledit état de progression en ligne droite.

La détection de la situation de vie « Ligne droite » est utilisée dans de nombreuses applications de systèmes pilotés (suspensions, GMP, direction assistée...). L'algorithme suivant présente donc de multiples applications.

Un autre objet de l'invention est un procédé de détection fiabilisée d'un état de progression en ligne droite d'un véhicule muni d'une pluralité de capteurs, ledit procédé comprenant :

- une étape de diagnostic ordonnancée pour indiquer ledit état de progression en ligne droite à partir de résidus corrigés; un résidu étant défini comme un décalage sur le signal de détection délivré par un capteur ou bien des combinaisons de plusieurs signaux ;
- une étape d'évaluation ordonnancée pour générer un résidu calculé à partir d'au moins une valeur de capteur et pour générer un résidu corrigé en retranchant un décalage d'un résidu calculé ;
- une étape d'estimation ordonnancée pour générer ledit décalage représentatif d'un écart entre le résidu calculé et une valeur de référence lorsque le véhicule est dans ledit état de progression en ligne droite.

Particulièrement, le procédé comprend une étape d'ajustement ordonnancée pour intégrer le résidu calculé courant dans une moyenne d'un nombre prédéterminé de valeurs de résidus calculés pour servir d'écart dans l'étape d'estimation.

Avantageusement, le procédé comprend une étape de confirmation ordonnancée pour activer l'étape d'ajustement après stabilisation du véhicule dans ledit état particulier.

Avantageusement encore, le procédé comprend une étape de validation ordonnancée pour activer l'étape d'estimation à condition que ledit état de progression en ligne droite persiste après que le nombre prédéterminé de résidus soit intégré dans ladite moyenne.

Plus particulièrement, ladite étape de diagnostic utilise des résultats d'un test de Wald appliqué aux résidus corrigés pour indiquer ledit état de progression en ligne droite.

Parmi différentes variantes de mise en oeuvre du procédé :

- ladite moyenne d'un nombre prédéterminé de résidus calculés sert d'écart dans l'étape d'estimation à condition qu'au moins un résidu ait un écart hors d'un intervalle de tolérance prédéterminé pendant le calcul de ladite moyenne ;
- l'étape d'estimation est activée lorsque le véhicule quitte ledit état de progression en ligne droite ;
- une étape est ordonnancée pour effectuer une somme pondérée des résultats des tests de Wald effectués sur les résidus à différents moments d'un même état de progression en ligne droite du véhicule ;
- une étape est ordonnancée pour appliquer à un résidu, un test statistique possédant un écart type dans ledit état de progression en ligne droite;
- une étape est ordonnancée pour retenir ledit écart type comme limite inférieure des écart types susceptibles de causer une fausse détection si au moins une fausse détection est survenue ;
- une étape est ordonnancée pour retenir ledit écart type comme limite supérieure des erreurs susceptibles de causer une fausse détection si aucune fausse détection n'est survenue ;
- une étape est ordonnancée pour augmenter ledit écart type tant qu'aucune limite supérieure n'est retenue ;
- une étape ordonnancée pour prendre la médiane de la limite inférieure et de la limite supérieure comme écart type lorsqu'une limite supérieure est retenue ;
- une étape agencée pour réitérer les étapes plusieurs fois ;
- une étape ordonnancée pour indiquer la dernière limite supérieure retenue comme étant une valeur d'écart type optimale.
- une étape ordonnancée pour ajouter une erreur sur une valeur de capteur mesurée dans ledit état de progression en ligne droite ;
- une étape ordonnancée pour retenir ladite erreur comme limite supérieure des erreurs susceptibles de causer une fausse détection si au moins une fausse détection est survenue ;
- une étape ordonnancée pour retenir ladite erreur comme limite inférieure des erreurs susceptibles de causer une fausse détection si aucune fausse détection n'est survenue ;
- une étape ordonnancée pour augmenter ladite erreur tant qu'aucune limite supérieure n'est retenue ;
- une étape ordonnancée pour diminuer ladite erreur lorsqu'une limite supérieure est retenue ;
- une étape agencée pour réitérer les étapes plusieurs fois ;
- une étape ordonnancée pour indiquer la dernière limite supérieure retenue comme étant une valeur minimale de défaut décelable.

On remarque que l'invention repose sur un algorithme numérique temps réel permettant la suppression des décalages, encore appelés biais, sur les valeurs données par un ensemble de capteur. D'autres objets et particularités de la présente invention ressortiront encore à la lumière de la description détaillée d'un mode préféré de réalisation en correspondance avec les dessins annexés dans lesquels :

- la figure 1 est un schéma de dispositif de détection de ligne droite sans correction de décalage;
- la figure 2 présente des étapes de procédé de détection sans correction de décalage ;
- La figure 3 représente un résultat de test sur un capteur ;
- la figure 4 est un schéma de dispositif de détection de ligne droite avec correction de décalage;
- la figure 5 présente des étapes de procédé de détection avec correction de décalage ;
- La figure 6 représente un résultat de test sur un capteur avec correction de décalage ;

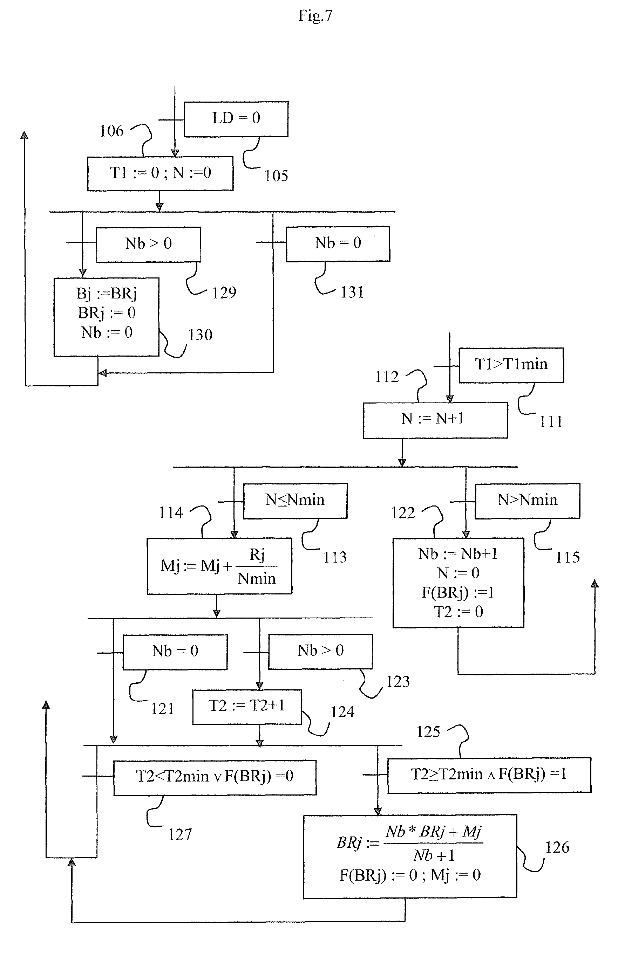

- La figure 7 présente des étapes pour une variante du procédé de la figure 5 ;
- La figure 8 est un schéma de dispositif adapté pour délivrer des valeurs corrigées de capteurs ;
- La figure 9 représente un écart type sur une ligne droite ;
- Les figures 10 et 11 présentent des étapes pour améliorer le procédé de la figure 5.

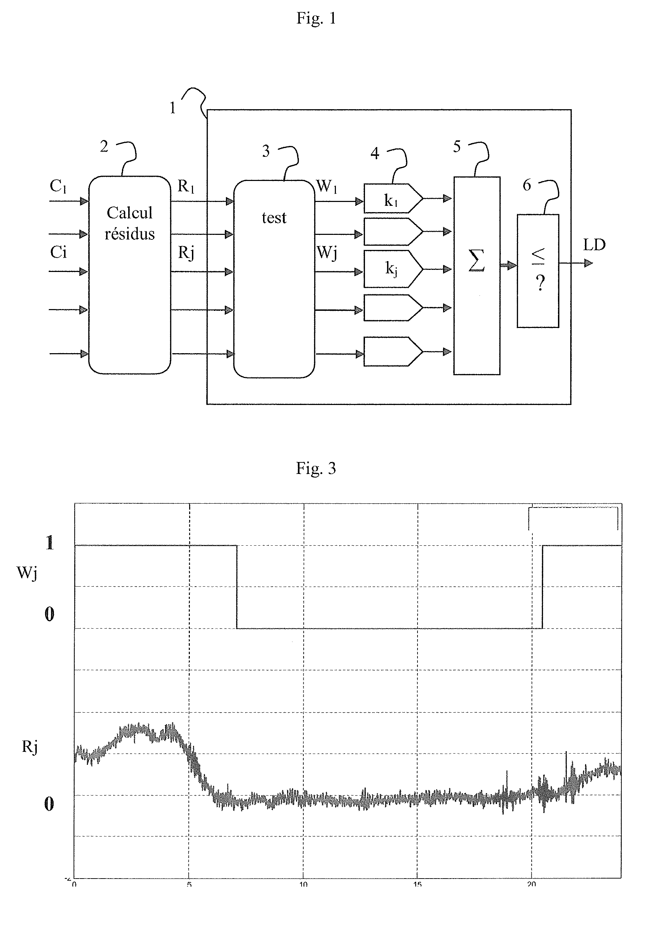

En référence à la figure 1, un dispositif de détection de véhicule en état de progresser en ligne droite, comprend un module 1 de diagnostic de ligne droite et un module 2 de calcul de résidus. Le module 2 reçoit en entrée les valeurs Ci de plusieurs capteurs, i allant de 1 à m où m est le nombre de capteurs. Par exemple avec m=10:

- C1 : la valeur du couple Volant « cple_volant_DAE » provient d'un systeme de Direction Assistée Electrique (DAE) non représenté ;
- C2 : la valeur de l'angle Volant « angle_volant_VOL » provient d'un capteur monté sur le volant de direction non représenté ;
- C3 : l'accélération latérale « alat_ESP » est mesurée par un accéléromètre ou est calculée à partir de mesures d'autres capteurs ;
- C4 : la vitesse véhicule « vxg_ABR » est calculée à partir de la vitesse des roues ou mesurée à partir d'autres capteurs comme par exemple un systeme GPS ou un tachymetre sur l'arbre de transmission;
- C5 : la vitesse de lacet du véhicule « vpsi_ESP » est calculée à partir de la vitesse des roues ou obtenue d'un capteur de vitesse de lacet;
- C6 : l'intensité du courant du moteur DAE « intensite_dae_AN » est donnée par le systeme de direction assistée électronique ;
- C7 à C10 : les vitesses respectives des quatre roues du véhicule « w1_TOR, w2_TOR, w3_TOR, w4_TOR » sont mesurées sur chaque roue.

A partir des informations capteurs mesurées Ci, le module 2 génère des résidus Rj nécessaires au diagnostic, qui peuvent être l'information d'un capteur ou bien des combinaisons de plusieurs signaux. Globalement, le résidu Rj est la valeur qui sépare une ou plusieurs mesures Ci d'une valeur Vj de référence qui correspond à la ligne droite, j variant de 1 à n. Par exemple pour n=7 :

- R1 : le résidu Couple volant = Couple volant (info *capteur)* - V1 où V1=0 ;
- R2 : le résidu Angle volant = Angle volant (info *capteur)* - V2 où V2=0 ;
- R3 : le résidu Vitesse de lacet du véhicule = Vitesse de lacet du véhicule *(info capteur)* - V3 où V3=0 ;
- R4 : le résidu Intensité du moteur DAE = Intensité du moteur DAE *(info capteur)* - V4 où V4=0 ;

- R5 : le résidu Courbure = Courbure -V5 où V5=0 avec $Courbure = \dfrac{Accélération\ latérale}{(Vitesse\ véhicule)^2}$

- R6 : le résidu vitesse roues avant $Res\_av = \dfrac{w1\_TOR - w2\_TOR}{Vitesse\ véhicule} - V6$ où V6=0 ;

- R7 : le résidu vitesse roues arrières $Res\_ar = \dfrac{w3\_TOR - w4\_TOR}{Vitesse\ véhicule} - V7$ où V7=0.

L'objectif étant de détecter quand le véhicule est dans un état « ligne droite », les résidus ont été choisis de façon à ce que l'état « ligne droite » corresponde à une valeur théorique nulle pour chacun d'eux. Par exemple lors d'une ligne droite, la valeur de la courbure est nulle.

Les signaux n'étant pas parfaits, notamment à cause des bruits et des imperfections des capteurs, un test statistique est particulièrement approprié pour savoir si la valeur de chaque résidu est statistiquement proche de 0 ou non.

Le module de diagnostique 1 comprend un sous module 3 de test appliqué agencé pour générer un résultat de test Wj associé à chaque résidu Rj. Il existe de nombreux tests possibles parmi les tests connus tels que les machines à vecteur de support (SVM pour Support Vector Machine en langue étrangere) ou le test de Wald. Le choix du test de Wald permet de déterminer sur chaque résidu si l'hypothèse « situation de vie ligne droite » est vraie ou non. Si le résidu testé indique une ligne droite (valeur statistiquement proche de 0), le test renvoie la valeur 0, autrement la valeur renvoyée est 1 (situation courbe).

Un exemple visuel du test de Wald sur la courbure est donné sur le graphique de la figure 3.

Pour chaque résidu, le réglage des parametres du test est effectué à partir de relevés récoltés durant des campagnes d'essais. Le test de Wald correspondant peut être effectué sur la moyenne ou sur la variance du signal selon la pertinence de l'une ou l'autre grandeur. Le mode de réalisation préféré est basé sur la variance des signaux.

A un instant t, chaque test fourni un 0 ou un 1, correspondant à la situation de vie respective de chaque résidu.

Le test de Wald utilise les k valeurs du résidu Rj échantillonnées à un instant z précédant l'instant z=t auquel le test est effectué au moyen de la formule suivante :

$$\frac{\ln(\frac{PM}{1-PF}) + k \cdot \ln(\frac{s1}{s0})}{\frac{s1^2 - s0^2}{2 \cdot s1^2 \cdot s0^2}} < \sum_{z=t-k}^{z=t} (Rj(z) - m0)^2 < \frac{\ln(\frac{1-PM}{PF}) + k \cdot \ln(\frac{s1}{s0})}{\frac{s1^2 - s0^2}{2 \cdot s1^2 \cdot s0^2}}$$

Le terme de gauche correspondant au seuil de fonctionnement normal (ligne droite) et celui de droite au seuil de fonctionnement anormal (courbe). La double inégalité provoque un hystérésis, c'est-à-dire que si la somme précédente des variances était inférieure au membre de gauche, conduisant à une détection de fonctionnement normal, il est nécessaire que la somme des variances à l'instant t devienne supérieure au membre de droite pour conduire à une détection de fonctionnement anormal et réciproquement. La plage délimitée par le terme de gauche et le terme de droite correspond à une bande morte.

La sensibilité du test dépend des parametres suivants :

- la moyenne **m0** des (k+1) échantillons Rj(z) ;
- l'écart type du résidu en situation « normale » **s0 ;**
- l'écart type du résidu en situation « anormale » **s1 ;**
- la probabilité de manque, non détection PM ;
- la probabilité de fausse détection : PF.

Les parametres PM et PF étant des constantes liées aux capteurs, c'est sur s0 et s1 que le réglage peut être effectué comme expliqué dans la suite de la description, de façon à agir sur les seuils et la rapidité de détection et ainsi affiner ou élargir l'intervalle de détection de ligne droite.

Ainsi, un jeu de parametre {s0,s1} pourra être « souple » pour que le test de Wald conséquent indique facilement des lignes droites, ou le jeu de parametre {s0,s1} pourra être « fin » pour que le test indique rarement des lignes droites.

Un sous module 4 du module de diagnostique 1, reçoit en entrée les résultats de test W1,..., Wj,... de façon à affecter une pondération k1,..., kj,... à chaque résultat de test. La valeur de chaque coefficient de pondération, par exemple 1 ou 2, reflete la fiabilité et la précision intrinsèque de chaque capteur à l'origine du résidu Rj correspondant au coefficient kj. Un capteur fiable, qui est peu sujet aux dérives (offset en langue étrangere) a une pondération élevée afin de donner plus d'importance au résultat de son test de Wald. Un capteur sensible, sujet aux bruits, a une pondération faible afin de relativiser le résultat de son test de Wald.

Le sous module 4 délivre les résultats pondérés à un sous module 5 qui effectue une somme des résultats de tests pondérés kj*Wj. Le sous module 5 transmet la somme obtenue à un sous module 6 qui détermine si le véhicule est en situation ligne droite ou non en comparant la somme des tests à une valeur de seuil. Par exemple si la valeur reçue du sous module 5 est inférieure ou égale à 2, le sous module 6 délivre une valeur LD égale à 1 pour indiquer que le véhicule est en ligne droite. Inversement, si la valeur reçue du sous module 5 est supérieure à la valeur de seuil, le sous module 6 délivre une valeur LD égale à 0 pour indiquer une courbure de trajectoire suivie par le véhicule.

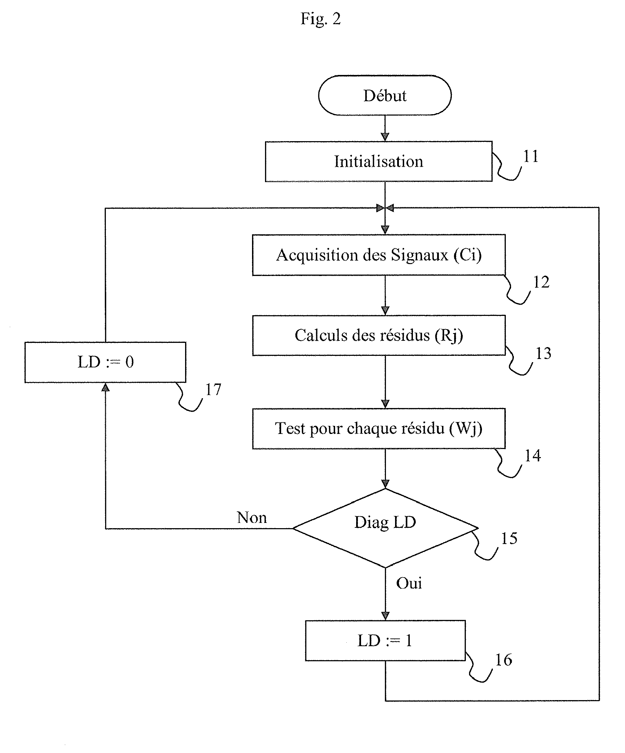

Une détection de trajectoire de véhicule en ligne droite peut être obtenue au moyen d'un ou plusieurs circuits dédiés qui mettent en oeuvre le dispositif de la figure 1 ou au moyen d'un programme exécuté par un processeur qui met en oeuvre le procédé expliqué à présent en référence à la figure 2.

Une étape 11 initialise les différentes variables et parametres utilisés dans les étapes suivantes.

Une étape 12 échantillonne à chaque instant t, les valeurs Ci(t) de capteurs tels que ceux mentionnés ci-dessus avec i=1...Ns. Cela peut être au moins tous les capteurs décrits précédemment (nus≥10) ou seulement une partie (Ns<10).

Une étape 13 calcule les résidus Rj(t) avec j=1...Nr, à partir des signaux capteurs acquis, leurs nombre Nr n'est pas forcément égal au nombre des signaux *Ns.* Par exemple dans le cas exposé précédemment :

- R1 (t) := C1(t) ;
- R2 (t) := C2(t) ;
- R3(t) C5(t) ;
- R4(t) C6(t) ;
- R5 (t) := C3(t)/(C4(t)*C4(t)) ;
- R6 (t) := (C8(t)-C7(t))/C4(t) ;
- R7 := (C10(t)-C9(t))/C4(t).

Les résidus Rj(t) sont préférentiellement mémorisés dans la cellule d'entrée d'un registre à décalage à k+1 cellules.

Une étape 14 effectue un test, statistique ou non, pour savoir si le résidu *Rj(t)* est représentatif d'une ligne droite (Wj(t)=0) ou d'une ligne courbe (Wj(t)=1). Un test statistique est par exemple le test de Wald sur la moyenne ou sur la variance du résidu pour lequel le registre à décalage est utile.

Une étape 15 effectue un test de ligne droite à partir des résultats des tests Wj sur chaque résidu Rj.

L'utilisation d'une pondération est préconisée car certains capteurs sont plus fiables que d'autres. On note les coefficients de pondération *kj,* avec j...Nr. Un test LD (Ligne Droite) avec un seuil Th égal à 2 peut être :

$$\sum_{j=1}^{Nr} kjWj \le 2$$ . Dans l'exemple de l'étape 13 :

```
∑(t) :=
W1(t)+2W2(t)+W3(t)+2W4(t)+2W5(t)+W6(t)+W7(t)
```

Une étape 16 met une variable booléenne LD à 1 si Σ(t)≤Th pour indiquer que le test détecte une ligne droite.

Une étape 17 met la variable booléenne LD à 0 si Σ(t)>Th pour indiquer que le test ne détecte pas une ligne droite.

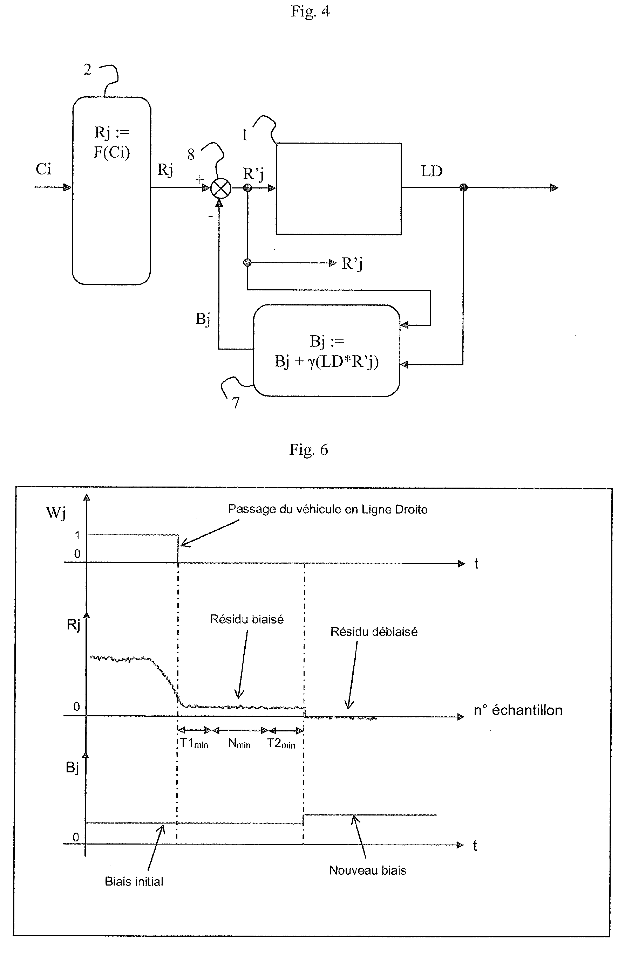

La figure 4 présente un dispositif amélioré de détection de ligne droite qui prend en compte le fait que tous les capteurs peuvent être sujets à des perturbations de type dérives ou autre qui biaisent les valeurs mesurées et provoquent un décalage sur les résidus qui en résultent. Le dispositif de la figure 4 comprend un module 7 d'estimation pour corriger les résidus.

Durant une situation de vie du véhicule dite de ligne droite, la valeur moyenne théorique des résidus est nulle, compte tenu du bruit. Cette observation mène à agencer le module 7 de façon à estimer une valeur de décalage Bj d'un résidu Rj en calculant sa moyenne pendant une ligne droite.

Le module 7 reçoit en entrée la variable booléenne LD produite par le module 1 de façon à détecter une situation de ligne droite. Un passage à 1 de la variable LD arme une temporisation de valeur T1 de façon à attendre un délai minimal T1 pour considérer le véhicule stabilisé en ligne droite.

Un différentiateur 8 reçoit pour chaque résidu Rj en provenance du module 2, le décalage Bj estimé par le module 7 de façon à générer un résidu corrigé R'j en soustrayant le décalage Bj du résidu Rj en provenance du module 2. Le résidu corrigé R'j est alors transmis au module 1 de façon à fiabiliser la variable booléenne LD. Le résidu corrigé R'j est aussi disponible pour d'autres applications éventuelles.

Dans l'exemple de réalisation présenté sur la figure 4, le module 7 reçoit aussi en entrée le résidu corrigé R'j. Lorsque le délai T1 est écoulé après réception de la variable LD à 1, le module 7 calcule une moyenne Mj des résidus R'j durant la ligne droite, en d'autres termes tant que la variable LD est à 1, sur un nombre de points *Nmin* pendant une durée Tmin. Dans le cas où l'état particulier du véhicule à détecter est la ligne droite, la valeur de référence d'un résidu est nulle et par conséquent l'écart entre le résidu et la valeur de référence est le résidu lui-même. La moyenne Mj des résidus R'j La moyenne *Mj* donne la valeur du décalage *Bj* du résidu considéré. Cette valeur de décalage est validée après un délai *T2* pendant lequel le véhicule doit rester en ligne droite, ce qui assure que la moyenne n'a pas pris en compte des valeurs de début de virage. Dans le cas idéal où le résidu R'j est parfaitement corrigé, la moyenne est nulle en ligne droite car la valeur de référence est nulle pour un état de ligne droite. Une valeur non nulle lorsque LD=1, nécessite un réajustement du décalage Bj précédemment estimé et mémorisé, en ajoutant au décalage précédent la valeur courante du résidu corrigé R'j. On réajuste ensuite la valeur instantanée du résidu Rj en retranchant le nouveau décalage estimé Bj au résidu en temps réel. Le diagnostic de ligne droite est effectué à partir des nouvelles valeurs de résidus fiabilisés. Tant qu'aucune estimation de décalage par le module 7 n'a été effectuée, la valeur mémorisée est soit nulle, soit initialisée avec une valeur de décalage généralement connue pour le type de capteurs considérés.

On remarque que, conformément aux parametres choisis, pour pouvoir calculer un décalage *Bj,* il faut une ligne droite sans discontinuité pendant un temps t supérieur à la somme des durée T1, Tmin et T2.

La figure 6 représente un exemple de correction de résidu au moyen du dispositif de la figure 4.

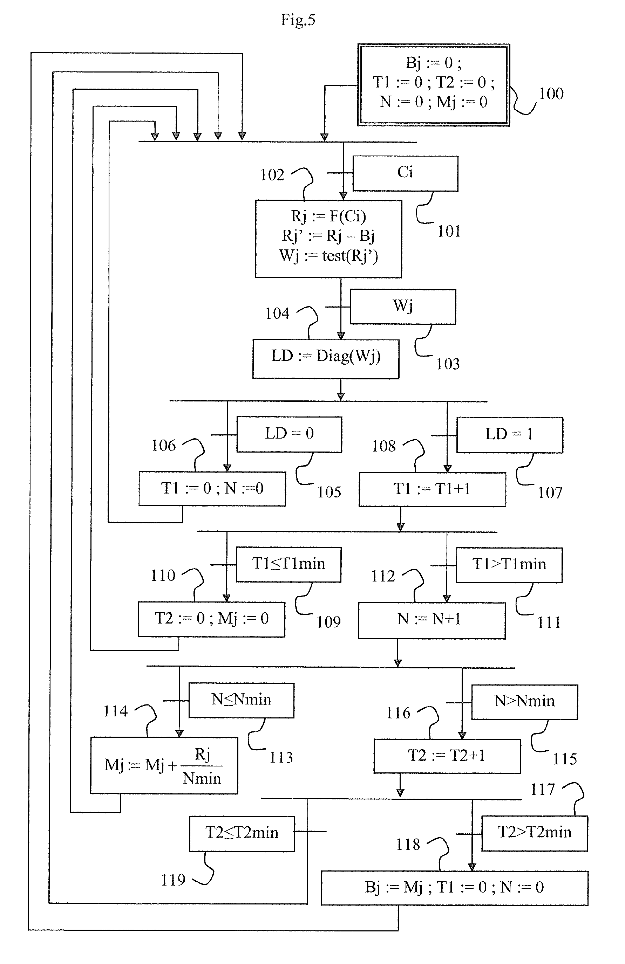

Le procédé expliqué à présent en référence à la figure 5 comprend des séquence d'étapes dont au moins une est exécutée à chaque incrément de temps, relativement au pas de calcul adopté pour la mise en oeuvre du procédé.

Une étape initiale 100 généralement activée à la mise sous tension du processeur qui exécute le procédé, est prévue pour donner des valeurs éventuellement paramétrables à des délais T1min, T2min et Nmin et pour initialiser des variables T1, N, T2, Mj, Bj à zéro.

Une transition 101 est validée par une acquisition de valeur de capteurs Ci tels que ceux précédemment mentionnés, à chaque instant t d'échantillonnage par le procédé.

Une validation de la transition 101 active une étape d'évaluation 102 qui calcule les résidus Rj comme dans l'étape 13 précédemment décrite, qui corrige chaque résidu Rj par rapport à son décalage Bj qui a été calculé dans une étape 118 d'estimation à un instant t-p précédent ou initialisé dans l'étape 1, p désignant un pas d'échantillonnage. Un test tel que le test de Wald expliqué précédemment est appliqué à chaque résidu corrigé R'j pour donner des valeurs Wj dont une valeur nulle indique une valeur de résidu R'j qui correspond à une ligne droite et dont une valeur non nulle indique une valeur de résidu R'j qui correspond à une ligne courbe.

A partir de l'étape 102, une transition 103 est validée par les résultats de test Wj.

Une validation de la transition 103 active une étape de diagnostic 104 qui met la variable booléenne LD à 1 pour indiquer une détection de ligne droite si une somme pondérée des résultats Wj est inférieure ou égale à un seuil Th, par exemple égal à 2 comme expliqué précédemment et qui met la variable booléenne LD à 0 pour indiquer une absence de détection de ligne droite si la somme pondérée des résultats Wj est supérieure au seuil Th.

A partir de l'étape 104, une transition 105 est validée par une valeur nulle de la variable booléenne LD et une transition 107 est validée par une valeur unitaire de la variable booléenne LD.

Une validation de la transition 107 active une étape 108 qui incrémente la valeur T1 par exemple contenue dans un compteur. La valeur T1 est remise à zéro dans une étape 106 activée par une validation de la transition 105. Ainsi la valeur T1 est augmentée à chaque instant t tant que la transition 105 n'est pas validée, c'est-à-dire tant que le véhicule reste en ligne droite.

A partir de l'étape 108, une transition 109 est validée par une valeur de la variable T1 inférieure ou égale à T1min et une transition 111 est validée par une valeur de la variable T1 supérieure à T1min

Une validation de la transition 111 active une étape 112 qui incrémente la valeur N par exemple contenue dans un compteur. La valeur N est remise à zéro dans l'étape 106 de sorte que la valeur N soit augmentée à chaque instant t tant que la transition 105 n'est pas validée, c'est-à-dire tant que le véhicule reste en ligne droite.

A partir de l'étape 112, une transition 113 est validée par une valeur de la variable N inférieure ou égale à Nmin et une transition 115 est validée par une valeur de la variable N supérieure à Nmin

Une validation de la transition 113 active une étape 114 d'ajustement qui ajoute à chaque valeur Mj par exemple contenue dans un vecteur mémoire, la valeur du résidu Rj divisée par Nmin de sorte que lorsque N atteint Nmin, Mj représente la moyenne des résidus Rj en quantité égale à Nmin. La valeur Mj est remise à zéro dans une étape 110 activée par une validation de la transition 109 de sorte que la valeur Mj est augmentée à chaque instant t tant que les transitions 109 et 115 ne sont pas validées, c'est-à-dire tant que t reste dans un intervalle [T1,Nmin] à l'intérieur duquel N représente un nombre de points sur lequel la moyenne est calculée à l'instant t. Tant que N n'atteint pas les Nmin points déterminés pour calculer une moyenne, on poursuit le calcul itératif de la moyenne.

Une validation de la transition 115 active une étape 116 qui incrémente la valeur T2 par exemple contenue dans un compteur. La valeur T2 est remise à zéro dans l'étape 110 de sorte que la valeur T2 est augmentée à chaque instant t tant que la transition 109 n'est pas validée, c'est-à-dire tant que T1 n'a pas été remis à zéro.

A partir de l'étape 116, une transition 117 est validée par une valeur de la variable T2 supérieure à T2min et une transition 119 est validée par une valeur de la variable T2 inférieure ou égale à T2min

Une validation de la transition 117 active l'étape 118 qui évalue la valeur de chaque décalage Bj comme étant égale à la moyenne Mj calculée en étape 114 si le compteur T2 est supérieur à T2min, en d'autres termes si le véhicule est toujours en ligne droite après un temps T2min depuis la fin du calcul de moyenne avant de mettre à jour les biais. Le décalage Bj servant à corriger le résidu Rj dans la prochaine exécution de l'étape 102, est mis à jour par la valeur de la moyenne du résidu Mj actuellement calculée pendant la ligne droite. Dans l'étape 118, la variable N est mise à 0 pour permettre de recalculer une nouvelle moyenne, ainsi que T1 de façon à remettre en étape 110, la moyenne à zéro pour recalculer une nouvelle moyenne et la valeur T2 à zéro pour attendre encore que l'on reste en ligne droite suffisamment longtemps après ce nouveau calcul.

La transition 101 est validée à partir des étapes 106, 110, 114 et de la transition 119 de façon à exécuter constamment le procédé en boucle fermée.

Dans la version du procédé qui vient d'être présentée, dite version de base, tous les résidus sont corrigés à chaque ligne droite, à partir des moyennes calculées dans l'étape 114 de l'organigramme de la figure 5.

Durant la situation de vie ligne droite, si aucun des capteurs ne présentait de défaut, la somme des tests devrait être égale à 0. Hors il se peut que le test $Wj$ d'un résidu $Rj$ indique '1' (situation courbe) alors que l'on a déterminé une situation ligne droite (somme $\leq$ 2).

Une première variante de la version de base consiste à corriger les résidus qui ont eu un biais durant la ligne droite, c'est-à-dire dont le $Wj$ a été non nul. Pour réaliser ceci, on ajoute une variable $WRj$ qui indique si le $Wj$ du résidu a été non nul pendant une ligne droite.

La variable $WRj$ est alors mise ou remise à zéro dans les étapes 100, 118 et 106 ou 110. A chaque exécution de l'étape 114, $WRj$ = (WRj ou $Wj$) de sorte que $WRj$ = 1 si le résidu a présenté un biais pendant la ligne droite et $WRj$ = 0 si le résidu n'a pas présenté de biais.

Dans l'étape 118, on exécute la fonction :

$$\forall j, \text{ si } WRj = 1 \text{ alors } Bj = Mj$$

Dans la version de base, à chaque nouvelle moyenne calculée, la valeur du biais $Bj$ est mise à jour dans l'étape 118. Sur une ligne droite de durée importante, cela peut engendrer une succession de recalages, dont les biais correspondent à chaque fois à la valeur de la moyenne calculée sur Nmin points.

Une deuxième variante de la version de base consiste à effectuer le recalage du résidu uniquement en fin de ligne droite, la valeur du biais finale étant égale à la moyenne de tous les biais calculés chacun sur Nmin points durant la ligne droite.

On effectue ainsi un seul débiaisage par ligne droite, prenant en compte toutes les valeurs des capteurs pendant la ligne droite, à T1 et T2 près.

Pour cette deuxième variante, on introduit une variable $Nb$ qui correspond au nombre de biais qui ont été calculés à l'instant t depuis le début de la ligne droite, ainsi que $BRj$ qui est la valeur moyenne des biais à l'instant t. Une variable booléenne $Flag\_BRj$ indique si une nouvelle moyenne vient d'être calculée. La variable booléenne Flag_BRj = 1 signifie qu'une moyenne sur Nmin points (Mj) a été calculée.

Dans l'étape 100, les variables Nb et BRj sont mises à zéro.

En référence à la figure 6, à partir de l'étape 106, une transition 129 est validée si Nb est positif et une transition 131 est validée si Nb est nul.

Une validation de la transition 129 active une étape 130 dans laquelle Bj est pris égal à BRj, Nb et BRj sont mises à zéro. La transition 101 est validée à partir de l'étape 130 ou directement suite à une validation de la transition 131.

Une validation de la transition 115 active maintenant une étape 122 dans laquelle Nb est incrémenté, N est mis à zéro et une variable booléenne F(BRj) est mise à 1. La variable T2 est alors mise à zéro avant de valider la transition 101 à partir de l'étape 122.

A partir de l'étape 114, une transition 121 et une transition 123 sont maintenant validées respectivement lorsque Nb est nul et lorsque Nb est positif.

Une validation de la transition 123 active une étape 124 dans laquelle T2 est incrémentée.

A partir de l'étape 124 ou directement à la suite d'une validation de la transition 121, une transition 125 est validée lorsque T2 est supérieure ou égale à T2min et F(BRj) est égal à 1, une transition 127 est validée dans le cas contraire.

Une validation de la transition 125 active une étape 126 dans laquelle on intègre la moyenne courante Mj dans la moyenne globale BRj et on remet à zéro la variable booléenne F(BRj) et la moyenne courante Mj.

La transition 101 est maintenant validée à partir de l'étape 126 ou directement à la suite d'une validation de la transition 127.

L'étape 130 permet de détecter la fin de ligne droite, qui correspond au front descendant de la variable booléenne LD. Si on atteint la fin de la ligne droite et que $Nb \geq 1$, c'est-à-dire que l'on a calculé au moins une valeur de biais, alors on met à jour la valeur du biais $Bj.$

On indique la nécessité pour T2min d'être strictement inférieure à Nmin.

Une troisième variante est obtenue en combinant la première et la deuxième variante. En effet il est possible de ne corriger que les capteurs signalés en défaut conformément à la première variante, et ce en effectuant une moyenne globale des moyennes courantes durant toute la ligne droite conformément à la deuxième variante.

Pour réaliser la troisième variante, il suffit d'apporter les modifications dues aux deux premières variantes sur l'organigramme de la figure 5.

Dans les modes de réalisation qui viennent d'être décrits pour fiabiliser la détection de ligne droite, les biais pour chaque résidu sont calculés à partir des moyennes effectuées durant les situations de vie ligne droite.

Dans une première configuration où les capteurs présentent des biais faibles ou nuls au départ, ou si ceux-ci sont connus, la détection des lignes droites peut se faire à partir d'un jeu de parametres "fins" des tests de Wald. Dans cette configuration, seules les lignes droites sans perturbation sont détectées, le recalage en est d'autant plus précis.

Dans une deuxième configuration où les capteurs présentent de biais importants sur les capteurs au départ, dont les valeurs ne sont pas connues, le réglage "fin" des parametres risquerait d'empêcher la détection de lignes droites et donc le débiaisage des signaux.

Afin de traiter le cas de la deuxième configuration, une méthode consiste à démarrer le procédé de recalage avec des jeux de parametres plutôt larges pour les tests de Wald de façon à détecter les lignes droites avec une certaine tolérance. Les moyennes durant ces lignes droites donnent alors des valeurs approchées des biais de chaque résidu.

Apres avoir effectué cette approximation des biais, les jeux de parametres des tests de Wald sont affinés pour donner lieu à un recalage plus précis.

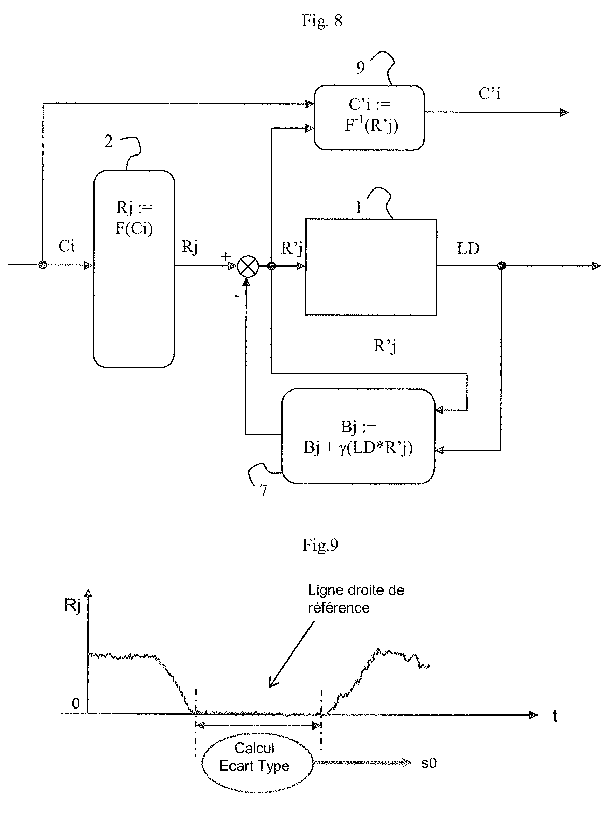

Le dispositif à présent décrit en référence à la figure 8 comprend un module 9 agencé pour recaler les signaux Ci délivrés par les capteurs. A partir des résidus débiaisés Ri, le module 9 permet de retrouver les valeurs C'i de certains signaux, en vue de les utiliser dans différentes applications avec une meilleure précision.

Par exemple pour le signal C2 délivré par le capteur d'angle volant, le résidu R2 est obtenu directement :

Residu_angle_volant = angle_volant - 0

car l'angle volant est nul lorsque le véhicule est en ligne droite.

Ayant R2 = F(C2) = C2, on en déduit $F^{-1}$ (R2) = R2. Par conséquent C'2 est tout simplement égal à R'2 en ligne droite. Le biais B2 sur le résidu R2 se reporte sur C2 et tant en ligne droite qu'en ligne courbe, on pose :

C'2 := C2 - B2

En ce qui concerne le signal C3 délivré par le capteur d'accélération latérale, le résidu courbure R5 est obtenu à partir du signal C4 du capteur de vitesse du véhicule et du signal C3 de l'accélération latérale. Quand un résidu est calculé à partir de plusieurs signaux de capteurs, il faut émettre des hypotheses pour calculer la valeur du signal de capteur corrigé. Pour retrouver la valeur de l'accélération latérale corrigée (**Accel_lat - BCi),** il faut considérer que le signal C4 correspondant à la vitesse véhicule **Vh** est fiable (pas de biais sur ce capteur) et donc que le biais B5 du résidu courbure R5 ne dépend que du biais B3 sur l'accélération latérale.

Sachant que R5 = $F_{C4}$(C3) = C3/C$^2$4, on en déduit $F^{-1}_{C4}$(R'5) = C$^2$4*R'5 = C'3.

En référence aux figures 8 et 9, le procédé comprend avantageusement des étapes pour optimiser les parametres utilisés dans les étapes précédemment décrites, notamment les parametres s0 et s1 des tests de Wald.

Une première variante d'optimisation se base sur le fait que le parametre s0 représente l'écart type du résidu sur lequel le test est effectué en situation normale, dans l'exemple de réalisation présenté ci-dessus, la situation normale correspond à la situation ligne droite.

En référence à la figure 8, dans une étape exécutée préalablement à l'exploitation du procédé, le parametre s0 qui, rappelons le, est distinct pour chaque résidu Rj, est déterminé en calculant l'écart type d'un relevé du résidu sur une ligne droite donnée comme référence, le biais de départ étant connu ou inexistant. On obtient ainsi directement la valeur de s0.

Le parametre s1 représente l'écart type du signal en fonctionnement anormal, dans l'exemple de réalisation présenté ci-dessus, la situation anormale correspond à la situation ligne courbe ou virage. On rappelle que le parametre s1 est distinct pour chaque résidu Rj. Reprenant l'écart type du résidu qui a servi au calcul de s0, on lui ajoute un espacement correspondant à la valeur minimale de décalage que l'on veut détecter. On obtient ainsi une valeur de s1.

Une deuxième variante d'optimisation utilise une succession de H expériences effectuées chacune durant un déplacement du véhicule sur une ligne droite de référence.

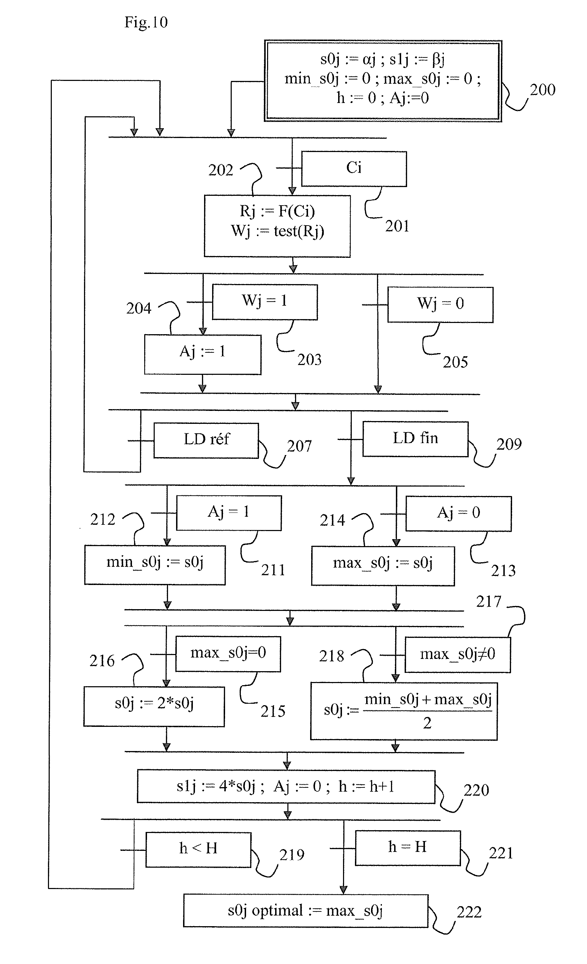

En référence à la figure 10, le procédé comprend une étape initiale 200 à la suite de laquelle sont effectuées les H expériences et dans laquelle pour chaque résidu Rj, une valeur de départ αj est donnée à un parametre s0j représentatif de l'écart type du résidu Rj dans l'état particulier et une valeur de départ βj est donnée au parametre s1j représentatif de l'écart type du résidu Rj hors de l'état particulier. Les valeurs αj et βj sont par exemple celles obtenues au moyen de la première variante d'optimisation. On positionne à zéro une limite basse min_s0j et une limite haute max_s0j de plage de variation du parametre s0. Les étapes suivantes vont déplacer et dilater cette plage de variation initialement nulle. On positionne aussi à zéro un indice h d'itération et un témoin binaire Aj.

On impose H mouvements sur une ligne droite de référence à un véhicule équipé pour délivrer les signaux Ci de capteurs mentionnés précédemment.

Une transition 201 est validée par une acquisition de valeur des capteurs Ci à chaque instant t d'échantillonnage par le procédé.

Une validation de la transition 201 active une étape d'évaluation 202 qui calcule les résidus Rj comme dans l'étape 13 précédemment décrite. Un test tel que le test de Wald expliqué précédemment est appliqué à chaque résidu Rj pour donner des valeurs Wj dont une valeur nulle indique une valeur de résidu Rj qui correspond à une ligne droite et dont une valeur non nulle indique une valeur de résidu Rj qui correspond à une ligne courbe.

A partir de l'étape 202, une transition 203 est validée par un résultat de test Wj égal à 1 et une transition 205 est validée par un résultat de test Wj égal à 0.

Une validation de la transition 203 active une étape 204 dans laquelle le témoin Aj est monté à 1.

A partir de l'étape 204 ou directement à la suite de la transition 205, une transition 207 est validée tant que le véhicule poursuit son mouvement sur la ligne droite de référence et une transition 209 est validée lorsque le mouvement sur la ligne droite de référence est terminé.

Une validation de la transition 207 reboucle sur la transition 201 de sorte qu'à validation de la transition 209, le témoin Aj est resté à zéro si les résultats de test Wj n'ont jamais détecté de courbe et le témoin Aj est monté à 1 si un résultat de test Wj a détecté une courbe sur la ligne droite.

A la suite de la transition 209, une transition 211 est validée si le témoin Aj est monté à 1 et une transition 213 est validée si le témoin Aj est resté à zéro.

Une validation de la transition 211 active une étape 212 dans laquelle la valeur actuelle de s0j devient la valeur minimale min_s0j de ce parametre puisque pour une valeur inférieur de s0j, encore plus de courbes serait détectées.

Une validation de la transition 213 active une étape 214 dans laquelle, le but étant de se rapprocher de la valeur limite de s0j en deçà de laquelle on risque des détections intempestives de courbes dans des situations de ligne droite, la valeur actuelle de s0j devient la valeur maximale max_s0j de ce parametre.

A partir de l'une ou l'autre des étapes 212 et 214, une transition 215 est validée si max_s0j = 0 et une transition 217 est validée si max_s0j ≠ 0.

Une validation de la transition 215 active une étape 216 dans laquelle on augmente la valeur de s0j, par exemple en la doublant, car une validation de la transition 215 indique que l'on n'a toujours pas atteint le seuil s0j d'immunité contre les détections intempestives de courbes.

Une validation de la transition 217 active une étape 218 dans laquelle on attribue au parametre s0j la valeur médiane entre les deux limites min_s0j et max_s0j afin de converger vers la valeur optimale.

Une étape 220 est systématiquement activée à la suite de l'une ou l'autre des étapes 216 et 218, dans laquelle la valeur de s1j est fixée en fonction de s0j pour effectuer le test de l'étape 202, l'indice h d'itération est incrémenté et le témoin binaire Aj est remis à zéro en vue d'une nouvelle expérience en ligne droite de référence. La valeur de slj est obtenue à partir de s0j au moyen d'une fonction affine, à titre illustratif on prend s1j=4*s0j.

A partir de l'étape 220, une transition 219 est validée tant que l'indice h est inférieur au nombre H d'expériences prévues et une transition 221 est validée des que l'indice h est égal au nombre H d'expériences prévues. Plus la valeur de H est élevée, plus l'erreur sur la valeur optimale de s0 est faible. D'autres critères d'arrêt qu'un nombre maximal d'expériences peuvent être utilisés tels que par exemple un critère de convergence sur un rapport entre max_s0j et s0j.

Une validation de la transition 219 reboucle le procédé sur la transition 201.

Une validation de la transition 221 active une étape 222 qui termine la variante d'optimisation du procédé en générant un vecteur de parametres s0j optimal dont chaque composante d'indice j est égale à max_s0j. Au final des H itérations, la valeur limite de s0 pour laquelle on ne détecte pas de courbe durant la ligne droite est donnée par la valeur de max_s0.

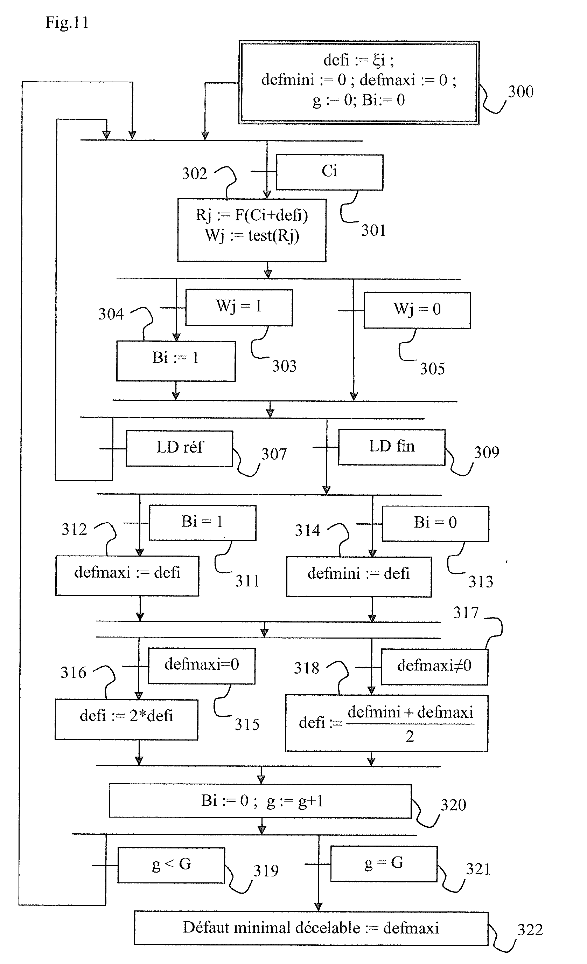

En référence à la figure 11, le procédé comprend des étapes pour évaluer de la performance de détection de défaut des capteurs. L'objectif est d'évaluer la valeur minimale de défaut, en termes de décalage, qui peut être décelée sur chaque signal Ci de capteur. Le principe est d'effectuer un calcul itératif par dichotomie.

Un nombre G d'expériences sur une ligne droite de référence, est effectué à la suite d'une étape initiale 300 dans laquelle pour chaque signal Ci de capteur, une valeur de départ ξI est donnée à une variable defi représente la valeur de défaut qui, introduite dans le signal Ci d'un capteur, provoque une détection intempestive de courbe dans une situation de ligne droite. La valeur ξi est par exemple égale à 3% d'une valeur Ci pleine échelle du capteur associé. On positionne à zéro une limite basse defmini et une limite haute defmaxi de plage de recherche du défaut defi minimal décelable. La limite basse est la valeur du plus grand défaut n'ayant pas provoqué de détection intempestive de courbe et la limite haute est la valeur du plus petit défaut ayant provoqué une détection intempestive de courbe. Les étapes suivantes vont déplacer et dilater cette plage de recherche initialement nulle. On positionne aussi à zéro un indice g d'itération et un témoin binaire Bi.

Une transition 301 est validée par une acquisition de valeur des capteurs Ci à chaque instant t d'échantillonnage par le procédé.

Une validation de la transition 301 active une étape d'évaluation 302 qui calcule les résidus Rj comme dans l'étape 13 précédemment décrite. Un test tel que le test de Wald expliqué précédemment est appliqué à chaque résidu Rj pour donner des valeurs Wj dont une valeur nulle indique une valeur de résidu Rj qui correspond à une ligne droite et dont une valeur non nulle indique une valeur de résidu Rj qui correspond à une ligne courbe.

A partir de l'étape 302, une transition 303 est validée par un résultat de test Wj égal à 1 et une transition 305 est validée par un résultat de test Wj égal à 0.

Une validation de la transition 303 active une étape 304 dans laquelle le témoin Bi est monté à 1.

A partir de l'étape 304 ou directement à la suite de la transition 305, une transition 307 est validée tant que le véhicule poursuit son mouvement sur la ligne droite de référence et une transition 309 est validée lorsque le mouvement sur la ligne droite de référence est terminé.

Une validation de la transition 307 reboucle sur la transition 301 de sorte qu'à validation de la transition 309, le témoin Bi est resté à zéro si les résultats de test Wj n'ont jamais détecté de courbe et le témoin Bi est monté à 1 si un résultat de test Wj a détecté une courbe sur la ligne droite.

A la suite de la transition 309, une transition 311 est validée si le témoin Bi est monté à 1 et une transition 313 est validée si le témoin Bi est resté à zéro.

Une validation de la transition 311 active une étape 312 dans laquelle la valeur actuelle defi de défaut sur Ci devient la valeur du plus petit défaut provoquant une détection intempestive de courbe dans l'expérience. Il n'est pas nécessaire de rechercher un défaut plus grand et la valeur actuelle defi constitue donc la limite haute defmaxi de la plage de recherche.

Une validation de la transition 313 active une étape 314 dans laquelle la valeur actuelle defi de défaut sur Ci devient la valeur du plus grand défaut ne provoquant pas une détection intempestive de courbe dans l'expérience. Il est alors utile de rechercher un défaut plus grand et la valeur actuelle defi constitue donc la limite basse defmini de la plage de recherche.

A partir de l'une ou l'autre des étapes 312 et 314, une transition 315 est validée si defmaxi = 0 et une transition 317 est validée si defmaxi ≠ 0.

Une validation de la transition 315 active une étape 316 dans laquelle on augmente la valeur de defi, par exemple en la doublant, car une validation de la transition 315 indique que l'on n'a toujours pas atteint la valeur minimale de défaut provoquant une détection intempestive de courbe.

Une validation de la transition 317 active une étape 318 dans laquelle on attribue à la valeur defi de défaut la valeur médiane entre les deux limites defmini et defmaxi afin de converger vers la valeur de défaut minimal qui, introduite sur la valeur Ci de capteur, provoque une détection intempestive de courbe.

Une étape 320 est systématiquement activée à la suite de l'une ou l'autre des étapes 316 et 318, dans laquelle l'indice g d'itération est incrémenté et le témoin binaire Bi est remis à zéro en vue d'une nouvelle expérience en ligne droite de référence.

A partir de l'étape 320, une transition 319 est validée tant que l'indice g est inférieur au nombre G d'expériences prévues et une transition 321 est validée des que l'indice g est égal au nombre G d'expériences prévues. Plus la valeur de G est élevée, plus l'erreur sur le défaut minimal décelable est faible. D'autres critères d'arrêt qu'un nombre maximal d'expériences peuvent être utilisés tels que par exemple un critère de convergence sur un rapport entre defmini et defi.

Une validation de la transition 319 reboucle le procédé sur la transition 301.

Une validation de la transition 321 active une étape 322 qui termine l'évaluation de performance de détection du procédé en générant un vecteur de valeurs defi décelables dont chaque composante d'indice i est égale à defmaxi. Au final des G itérations, la valeur limite de défaut pour laquelle le test détecte le défaut est donnée par la valeur defmaxi.

Les valeurs données ci-dessous constituent des valeurs préférentielles de paramétrage des tests, obtenues à partir des expériences décrites ci-dessus.

*%%% Pas d'échantillonnage*
pas_int=0.004;

*%%% Paramètres des tests de Wald %%%%*
PM=0.000001; *% Probabilité de manque*
PF=0.000001; *% Probavilité de fausse alarme*
*% Angle volant [rad]*
m0_angle=0.0; *% Moyenne ligne*
s0_angle=0.016*1.6; *% Ecart type ligne droite*
s1_angle=s0_angle*4; *% Ecart type courbe*
m0_vitesse=0;
s0_vitesse=5e-3;
s1_vitesse=s0_vitesse*4;
*% Couple Volant [N.m]*
m0_couple=0;
s0_couple=0.52;
s1_couple=s0_couple*4;

% Intensité moteur de DAE [A]
m0_intensite=0;
s0_intensite=0.3325;
s1_intensite=s0_intensite*4*1.2;
% Courbure [m-l]
m0_courbure=0.0;
s0_courbure=0.21e-3*1.2*1.5;
s1_courbure=s0_courbure*4*2;
% Résidu entre les roues avant / Vh [3D]
m0_res_roues_av=0;
s0_res_roues_av=0.7021e-3*1.2;
s1_res_roues_av=s0_res_roues_av*4;
% Résidu entre les roues arrière / Vh [3D]
m0_res_roues_ar=0;
s0_res_roues_ar=1.356e-3*1.2;
s1_res_roues_ar=s0_res_roues_ar*4;
%%% Paramètres de recalage %%%
Nmin=500; % Nombre de points pour la moyenne
N1=50; % Nombre de points minimum pour considérer que l'on est bien en ligne droite corrrespondant au temps T1.
N2=200; % Nombre de points minimum qu'il doit y avoir entre la fin du calcul du biais et la fin de la LD, correspondant à T2.

## Revendications

1.  Dispositif de détection fiabilisée d'un état de progression en ligne droite (LD) d'un véhicule équipé d'une pluralité de capteurs, ledit dispositif comprenant un module (1) de diagnostic comprenant :

    - un premier sous module (3) de test agencé pour générer un résultat de test (Wj) associé à chaque résidu (Rj), un résidu étant défini comme un décalage sur le signal de détection délivré par un capteur ou bien des combinaisons de plusieurs signaux ;- un deuxième sous module (4), recevant en entrée les résultats de test (Wj) délivrés par le premier sous-module (3) de façon à affecter une pondération (kj) à chaque résultat de test ;
    - un troisième sous module (5) recevant les résultats pondérés délivrés par le deuxième sous module (4) et qui effectue une somme des résultats de tests pondérés (kj*Wj)
    - un quatrième sous module (6) qui à partir de la somme obtenue dans le troisième sous module (5) détermine si le véhicule est en situation ligne droite ou non en comparant la somme des tests à une valeur de seuil.

2.  Dispositif selon la revendication 1, **caractérisé en ce qu'**il comporte en outre un différentiateur (8) agencé pour générer un résidu corrigé (R'j) en retranchant un décalage (Bj) d'un résidu (Rj) calculé ;

    - un module (2) d'instrumentation agencé pour générer le résidu (Rj) mesuré à partir d'au moins une valeur (Ci) de capteur ;
    - un module (7) d'estimation agencé pour générer ledit décalage (Bj) représentatif d'un écart entre le résidu (Rj) calculé et une valeur de référence lorsque le véhicule est dans ledit état particulier.

3.  Dispositif selon la revendication 2, **caractérisé en ce que** le module (7) d'estimation est agencé pour ajuster le décalage (Bj) initialement nul, à partir du résidu corrigé (R'j).

4.  Dispositif selon la revendication 2 ou 3, **caractérisé en ce que** le module (7) d'estimation est agencé pour ajuster le décalage (Bj) à partir d'une valeur moyenne (Mj) de résidus calculés ou corrigés, calculée pendant une première durée continue au cours de laquelle le véhicule est resté dans ledit état particulier.

5.  Dispositif selon la revendication 4, **caractérisé en ce que** ladite durée continue est strictement incluse dans une deuxième durée de plus grande étendue que la première durée et au cours de laquelle le véhicule est resté dans ledit état particulier.

6.  Dispositif selon l'une des revendications 2 à 5, **caractérisé en ce que** ledit module (1) de diagnostic est agencé pour indiquer ledit état particulier au moyen d'un test de Wald appliqué sur résidus (R'j) corrigés.

**7.** Dispositif selon l'une des revendications 2 à 6, **caractérisé en ce qu'**il comprend un module (9) agencé pour recaler une valeur (Ci) de capteur à partir d'un résidu corrigé (R'j).

**8.** Dispositif selon l'une des revendications 2 à 7, **caractérisé en ce que** :

- le module (1) de diagnostic est agencé pour indiquer un état particulier qui correspond à une situation de ligne droite;
- le module (2) d'instrumentation est agencé pour générer le résidu (Rj) calculé à partir d'au moins une valeur (Ci) de capteur différente selon une situation de véhicule en ligne droite ou en ligne courbe;
- le module (7) d'estimation est agencé pour générer ledit décalage (Bj) représentatif d'un écart entre le résidu (Rj) calculé et une valeur nulle lorsque le véhicule est dans ledit état particulier qui correspond à une situation de ligne droite.

**9.** Procédé de détection fiabilisée d'un état de progression en ligne droite (LD) d'un véhicule muni d'une pluralité de capteurs, ledit procédé comprenant :

- une étape (104) de diagnostic ordonnancée pour indiquer ledit état de progression en ligne droite (LD) à partir de résidus (R'j) corrigés; un résidu étant défini comme un décalage sur le signal de détection délivré par un capteur ou bien des combinaisons de plusieurs signaux ;
- une étape (102) d'évaluation ordonnancée pour générer un résidu (Rj) calculé à partir d'au moins une valeur (Ci) de capteur et pour générer un résidu corrigé (R'j) en retranchant un décalage (Bj) d'un résidu (Rj) calculé ;
- une étape (118,130) d'estimation ordonnancée pour générer ledit décalage (Bj) représentatif d'un écart entre le résidu (Rj) calculé et une valeur de référence lorsque le véhicule est dans ledit état de progression en ligne droite (LD)..

**10.** Procédé selon la revendication 9, **caractérisé en ce qu'**il comprend une étape (114) d'ajustement ordonnancée pour intégrer le résidu calculé (Rj) courant dans une moyenne (Mj) d'un nombre prédéterminé (Nmin) de valeurs de résidus calculés pour servir d'écart dans l'étape (118,130) d'estimation.

**11.** Procédé selon la revendication 10, **caractérisé en ce qu'**il comprend une étape (108) de confirmation ordonnancée pour activer l'étape (114) d'ajustement après stabilisation du véhicule dans ledit état de progression en ligne droite (LD).

**12.** Procédé selon la revendication 10 ou 11, **caractérisé en ce qu'**il comprend une étape (116) de validation ordonnancée pour activer l'étape (118,130) d'estimation à condition que ledit état de progression en ligne droite (LD) persiste après que le nombre prédéterminé (Nmin) de résidus soit intégré dans ladite moyenne.

**13.** Procédé selon l'une des revendications 9 à 10, **caractérisé en ce que** ladite étape (104) de diagnostic utilise des résultats (Wj) d'un test de Wald appliqué aux résidus (R'j) corrigés pour indiquer ledit état de progression en ligne droite (LD).

**14.** Procédé selon l'une des revendications 10 à 11, **caractérisé en ce que** ladite moyenne (Mj) d'un nombre prédéterminé (Nmin) de valeurs de résidus calculés sert d'écart dans l'étape (118,130) d'estimation à condition qu'au moins un résidu (Rj) ait un écart hors d'un intervalle de tolérance prédéterminé pendant le calcul de ladite moyenne.

**15.** Procédé selon l'une des revendications 9 à 14, **caractérisé en ce que** l'étape d'estimation (130) est activée lorsque le véhicule quitte ledit état de progression en ligne droite (LD).

**16.** Procédé selon la revendication 15 **caractérisé en ce qu'**il comprend une étape (126) ordonnancée pour effectuer une somme pondérée de résultats de tests de Wald effectués sur les résidus à différents moments d'un même état de progression en ligne droite (LD).

**17.** Procédé selon l'une des revendications 9 à 16, **caractérisé en ce qu'**il comprend :

- une étape (202) ordonnancée pour appliquer à un résidu (Rj), un test statistique possédant un écart type (s0j) dans ledit état de progression en ligne droite (LD);
- une étape (212) ordonnancée pour retenir ledit écart type (s0j) comme limite inférieure des écart types susceptibles de causer une fausse détection si au moins une fausse détection est survenue ;

- une étape (214) ordonnancée pour retenir ledit écart type (s0j) comme limite supérieure des erreurs susceptibles de causer une fausse détection si aucune fausse détection n'est survenue ;
- une étape (216) ordonnancée pour augmenter ledit écart type (s0j) tant qu'aucune limite supérieure n'est retenue ;
- une étape (218) ordonnancée pour prendre la médiane de la limite inférieure et de la limite supérieure comme écart type (s0j) lorsqu'une limite supérieure est retenue ;
- une étape (220) agencée pour réitérer les étapes (202,212,214,216,218) plusieurs fois ;
- une étape (222) ordonnancée pour indiquer la dernière limite supérieure retenue comme étant une valeur d'écart type (s0j) optimale.

**18.** Procédé selon l'une des revendications 9 à 17, **caractérisé en ce qu'**il comprend :

- une étape (302) ordonnancée pour ajouter une erreur (defi) sur une valeur (Ci) de capteur calculée dans ledit état particulier ;
- une étape (312) ordonnancée pour retenir ladite erreur (defi) comme limite supérieure des erreurs susceptibles de causer une fausse détection si au moins une fausse détection est survenue ;
- une étape (314) ordonnancée pour retenir ladite erreur (defi) comme limite inférieure des erreurs susceptibles de causer une fausse détection si aucune fausse détection n'est survenue ;
- une étape (316) ordonnancée pour augmenter ladite erreur (defi) tant qu'aucune limite supérieure n'est retenue ;
- une étape (318) ordonnancée pour diminuer ladite erreur (defi) lorsqu'une limite supérieure est retenue ;
- une étape (320) agencée pour réitérer les étapes (302,312,314,316,318) plusieurs fois ;
- une étape (322) ordonnancée pour indiquer la dernière limite supérieure retenue comme étant une valeur minimale de défaut décelable.

Fig. 1

Fig. 3

Fig. 2

```
                    ┌──────────────┐
                    │    Début     │
                    └──────┬───────┘
                           │
                    ┌──────▼───────┐
                    │ Initialisation│  ⌐11
                    └──────┬───────┘
                           │
          ┌────────────────┼──────────────────────┐
          │         ┌──────▼─────────────┐         │
          │         │ Acquisition des    │  ⌐12    │
          │         │  Signaux (Ci)      │         │
          │         └──────┬─────────────┘         │
          │         ┌──────▼─────────────┐         │
          │         │ Calculs des        │  ⌐13    │
          │         │  résidus (Rj)      │         │
          │         └──────┬─────────────┘         │
    ┌─────▼────┐    ┌──────▼─────────────┐         │
    │ LD := 0  │    │ Test pour chaque   │  ⌐14    │
    │   ⌐17    │    │  résidu (Wj)       │         │
    └─────▲────┘    └──────┬─────────────┘         │
          │                │                       │
          │  Non     ┌─────▼──────┐                │
          └──────────│  Diag LD   │  ⌐15           │
                     └─────┬──────┘                │
                           │ Oui                   │
                     ┌─────▼──────┐                │
                     │  LD := 1   │  ⌐16           │
                     └─────┬──────┘                │
                           └───────────────────────┘
```

Fig. 4

Fig. 6

Fig.5

Bj := 0 ;
T1 := 0 ; T2 := 0 ;
N := 0 ; Mj := 0          100

102          Ci

Rj := F(Ci)
Rj' := Rj – Bj          101
Wj := test(Rj')

104          Wj

LD := Diag(Wj)          103

LD = 0          106                    LD = 1          108

T1 := 0 ; N :=0          105          T1 := T1+1          107

T1≤T1min          110                  T1>T1min          112

T2 := 0 ; Mj := 0          109          N := N+1          111

N≤Nmin          114                      N>Nmin          116

$$Mj := Mj + \frac{Rj}{Nmin}$$          113          T2 := T2+1          115

T2≤T2min          117                    T2>T2min          118

119                    Bj := Mj ; T1 := 0 ; N := 0

18

EP 2 082 940 A1

Fig.7

Fig. 8

Fig.9

Fig.10

$s0j := \alpha j$ ; $s1j := \beta j$
$min\_s0j := 0$ ; $max\_s0j := 0$ ;
$h := 0$ ; $Aj := 0$    200

202

Ci    201

$Rj := F(Ci)$
$Wj := test(Rj)$

204

$Wj = 1$    203

$Wj = 0$    205

$Aj := 1$

LD réf    207

LD fin    209

212

$Aj = 1$    211

214

$Aj = 0$    213

$min\_s0j := s0j$

$max\_s0j := s0j$

216

$max\_s0j = 0$    215

217

218

$max\_s0j \neq 0$

$s0j := 2 * s0j$

$s0j := \dfrac{min\_s0j + max\_s0j}{2}$

$s1j := 4 * s0j$ ; $Aj := 0$ ; $h := h+1$    220

$h < H$    219

$h = H$    221

$s0j$ optimal $:= max\_s0j$    222

Fig.11

$$defi := \xi i \,;$$
$$defmini := 0 \,; defmaxi := 0 \,;$$
$$g := 0; \, Bi := 0$$

300

302

Ci

301

$$Rj := F(Ci+defi)$$
$$Wj := test(Rj)$$

304

$$Wj = 1$$

$$Wj = 0$$

$$Bi := 1$$

303

305

LD réf

307

LD fin

309

312

$$Bi = 1$$

314

$$Bi = 0$$

$$defmaxi := defi$$

311

$$defmini := defi$$

313

317

316

$$defmaxi = 0$$

318

$$defmaxi \neq 0$$

$$defi := 2*defi$$

315

$$defi := \frac{defmini + defmaxi}{2}$$

$$Bi := 0 \,; \, g := g+1$$

320

$$g < G$$

319

$$g = G$$

321

Défaut minimal décelable := defmaxi

322

**EP 2 082 940 A1**

Europäisches
Patentamt

European
Patent Office

Office européen
des brevets

## RAPPORT DE RECHERCHE EUROPEENNE

Numéro de la demande

EP 08 17 2155

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2004/230375 A1 (MATSUMOTO SHINJI [JP] ET AL) 18 novembre 2004 (2004-11-18) * le document en entier * | 1,9 | INV. B60W50/04 G06F11/30 |
| Y | | 2 | B60W30/12 |
| Y | US 6 021 367 A (PILUTTI THOMAS EDWARD [US] ET AL) 1 février 2000 (2000-02-01) * le document en entier * * figure 10 * | 2 | |
| A | | 1,9 | |
| P,X | DE 10 2008 020007 A1 (CONTINENTAL TEVES AG & CO OHG [DE]) 23 octobre 2008 (2008-10-23) * le document en entier * | 1,9 | |
| X | US 2007/164852 A1 (LITKOUHI BAKHTIAR B [US] LITKOUHI BAKHTIAR BRIAN [US]) 19 juillet 2007 (2007-07-19) * le document en entier * | 1,9 | |
| P,A | US 2008/243327 A1 (BUJAK CHRISTOPHER R [US] ET AL) 2 octobre 2008 (2008-10-02) * le document en entier * | 1,9 | DOMAINES TECHNIQUES RECHERCHES (IPC) B60W |
| A | US 2001/011201 A1 (NISHIZAKI KATSUTOSHI [JP] ET AL) 2 août 2001 (2001-08-02) * le document en entier * * figure 2 * | 1,2,9 | |
| D,A | EP 0 844 462 A (ZEXEL CORP [JP] VISTEON TECH LLC [US]) 27 mai 1998 (1998-05-27) * le document en entier * | 1,2,9 | |
| D,A | EP 1 388 473 A (FORD GLOBAL TECH LLC [US]) 11 février 2004 (2004-02-11) * le document en entier * | 1,2,9 | |

Le présent rapport a été établi pour toutes les revendications

| Lieu de la recherche | Date d'achèvement de la recherche | Examinateur |
|---|---|---|
| La Haye | 14 mai 2009 | Van der Veen, Frits |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 17 2155

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-05-2009

| Document brevet cité au rapport de recherche | | Date de publication | Membre(s) de la famille de brevet(s) | | Date de publication |
|---|---|---|---|---|---|
| US 2004230375 | A1 | 18-11-2004 | DE 102004023449 A1 | | 10-02-2005 |
| | | | JP 3979339 B2 | | 19-09-2007 |
| | | | JP 2004330995 A | | 25-11-2004 |
| US 6021367 | A | 01-02-2000 | AUCUN | | |
| DE 102008020007 | A1 | 23-10-2008 | AUCUN | | |
| US 2007164852 | A1 | 19-07-2007 | CN 101041355 A | | 26-09-2007 |
| | | | DE 102007002206 A1 | | 08-11-2007 |
| US 2008243327 | A1 | 02-10-2008 | AUCUN | | |
| US 2001011201 | A1 | 02-08-2001 | DE 10103925 A1 | | 02-08-2001 |
| | | | FR 2804398 A1 | | 03-08-2001 |
| | | | JP 3696466 B2 | | 21-09-2005 |
| | | | JP 2001213340 A | | 07-08-2001 |
| EP 0844462 | A | 27-05-1998 | CA 2221339 A1 | | 22-05-1998 |
| | | | DE 69728497 D1 | | 13-05-2004 |
| | | | DE 69728497 T2 | | 14-04-2005 |
| | | | JP 3380727 B2 | | 24-02-2003 |
| | | | JP 10246642 A | | 14-09-1998 |
| | | | US 6253154 B1 | | 26-06-2001 |
| EP 1388473 | A | 11-02-2004 | DE 60302506 D1 | | 05-01-2006 |
| | | | DE 60302506 T2 | | 17-08-2006 |
| | | | US 2004030474 A1 | | 12-02-2004 |

EPO FORM P0460

Pour tout renseignement concernant cette annexe : voir Journal Officiel de l'Office européen des brevets, No.12/82

**EP 2 082 940 A1**

**RÉFÉRENCES CITÉES DANS LA DESCRIPTION**

**Documents brevets cités dans la description**

- EP 1388473 A
- EP 0844462 A